# EUROPÄISCHE PATENTSCHRIFT

(11) **EP 1 362 384 B1**
(45) Veröffentlichungstag und Bekanntmachung des Hinweises auf die Patenterteilung: **25.10.2006**
(21) Anmeldenummer: 02708192.6
(22) Anmeldetag: 31.01.2002
(51) Int. Cl.: H01M 8/06, H01M 8/10, H01M 8/02

(54) **BRENNSTOFFZELLENSYSTEM**
FUEL CELL SYSTEM
SYSTEME DE PILE A COMBUSTIBLE

(30) Priorität: 17.02.2001 DE 10107529
(43) Veröffentlichungstag der Anmeldung: 19.11.2003
(73) Patentinhaber: Forschungszentrum Jülich GmbH, 52425 Jülich (DE)
(72) Erfinder: DOHLE, Hendrik, 52224 Stolberg-Mausbach (DE); BEWER, Thomas, 52428 Jülich (DE)
(86) Internationale Anmeldenummer: PCT/DE2002/000359
(87) Internationale Veröffentlichungsnummer: WO 2002/067354

(56) Entgegenhaltungen:
- EP-A- 0 798 800
- EP-A- 0 924 786
- US-A- 5 981 096
- US-A- 6 096 448
- US-A- 6 124 053

## Beschreibung

Die Erfindung betrifft ein Brennstoffzellensystem, insbesondere ein Brennstoffzellensystem umfassend wenigstens eine Direkt-Methanol-Brennstoffzelle.

### Stand der Technik

Aus DE 199 21 816 C1 ist ein Brennstoffzellensystem, umfassend einzelne Brennstoffzellen, bekannt. Das System weist weiterhin eine Entsorgungsvorrichtung zur Aufnahme der durch den Betrieb der Brennstoffzellen gebildeten Abfallprodukte auf. Dies ist insbesondere eine Filtereinrichtung und eine Ionenaustauschereinrichtung. Durch Filtereinrichtungen ist es vorteilhaft möglich, die entstehenden Abfallprodukte voneinander zu trennen und getrennt zu sammeln, was die spätere Entsorgung erleichtert. Dies kann beispielsweise zur Umwandlung von an der Anode entstehendem gasförmigem CO₂ zu festem Karbonat genutzt werden.

Bei der in DE 199 21 816 C offenbarten Ionenaustauschereinrichtung als Entsorgungsvorrichtung wird zunächst ein Abfallprodukt umgewandelt und anschließend in einer Aufnahmeeinrichtung gesammelt. Bei dem in DE 199 21 816 C1 beschriebenen Brennstoffzellensystem kann die Brennstoffseite des Systems so vorteilhaft völlig entkoppelt von der Umwelt betrieben werden.

Nachteilig bei diesem System ist jedoch, daß die Abfallprodukte innerhalb des Systems zunächst gesammelt und erst zu einem bestimmten Zeitpunkt aus dem System entnommen werden.

Aus US 6,124,053 A ist ein Brennstoffzellensystem bekannt, bei dem die Anodenabgase katalytisch verbrannt werden. Das Anodenabgas wird dabei zusammen mit einem gasförmigen Oxidationsmittel über einen porösen Katalysator geleitet, der am Eingangsbereich des Kathodenraums angeordnet ist. Das verbrannte Abgas wird anschließend ggf. mit weiterem Trägergas oder Oxidationsmittel der Kathode zugeführt.
Eine katalytische Nachverbrennung ist aus US 5,981,096 A bekannt. Hier wird bei einem mit Alkohol arbeitendem Brennstoffzellensystem das gesamte Kathodenabgas über einen Verbrennungskatalysator geleitet.

### Aufgabe und Lösung

Die Aufgabe der Erfindung ist es, ein Brennstoffzellensystem zu schaffen, bei welchem ein unerwünschter Austrag an Alkohol vermieden wird.
Die Aufgabe wird gelöst durch ein Brennstoffzellensystem gemäß Hauptanspruch sowie durch ein Verfahren zum Betreiben eines Brennstoffzellensystems gemäß dem Nebenanspruch. Vorteilhafte Ausführungsformen des Brennstoffzellensystems und des Verfahren sind den jeweils rückbezogenen Ansprüchen zu entnehmen.

### Gegenstand der Erfindung

Das Brennstoffzellensystem nach Anspruch 1 umfaßt wenigstens eine Brennstoffzelle und weist im Abgasbereich des Brennstoffzellensystems einen Katalysator auf. Unter dem Abgasbereich eines Brennstoffzellensystems ist der Bereich zu verstehen, in dem sich Abgase bilden und weitergeleitet werden. Innerhalb einer Brennstoffzelle zählt dazu der Kathodenraum sowie die Abgasleitungen vom Kathodenraum aus. Bei einem Brennstoffzellensystem, umfassend mehrere Brennstoffzellen, gehören zu einem Abgasbereich neben den einzelnen Kathoden- bzw. Anodenraümen der einzelnen Brennstoffzellen auch Sammelleitungen für die Abgase.

Als Katalysator im Sinne dieser Erfindung, der in diesem Abgasbereich angeordnet ist, ist nicht der in der Membran-Elektrodenanordnung einer Brennstoffzelle befindliche übliche Katalysator einer Brennstoffzelle zu verstehen. Das in Anspruch 1 offenbarte Brennstoffzellensystem weist sozusagen darüber hinaus einen zusätzlichen Katalysator auf.
Eine vorteilhafte Ausgestaltung des Brennstoffzellensystems gemäß Anspruch 2 weist mindestens eine Direkt-Alkohol-Brennstoffzelle auf.

Bei einer Direkt-Alkohol-Brennstoffzelle bildet sich im Anodenraum ein Alkohol aufweisendes Abgas aus. Weiterhin gelangen im Regelfall Teile des Alkohols aus dem Anodenraum durch die Alkoholpermeation durch die Membran in den Kathodenraum und bilden auch dort in der Regel Alkohol aufweisende Abgase. Der im Abgasraum eines Brennstoffzellensystems befindliche Katalysator bewirkt eine katalytische Umsetzung des Alkohols und verringert somit die Gefahr des Alkoholaustrags aus dem Brennstoffzellensystem.

Vorteilhaft ist der Katalysator nach Anspruch 3 direkt im Kathodenraum einer Brennstoffzelle angeordnet, um dort den Alkohol sofort umzuwandeln.

Gemäß Anspruch 4 ist der Katalysator im Kathodenraum in der Lage, Alkohol zu oxidieren. Vorteilhaft befindet sich im Kathodenraum ein Oxidationsmittel, insbesondere Sauerstoff, welcher die oxidative Umwandlung von Alkohol in Anwesenheit des Katalysators in Wasser und Kohlendioxid fördert. Vorteilhaft können auch weitere Nebenprodukte, die während des Betriebs einer Brennstoffzelle entstehen, oxidativ mit diesem Katalysator umgewandelt werden. Dazu gehören u. a. Formaldehyd, Methylformiat oder auch Ameisensäure.

Eine besondere Ausgestaltung nach Anspruch 5 sieht den Katalysator in Form einer porösen Schicht vor. Dabei kann die poröse Schicht vollständig aus Katalysatormaterial bestehen. Vorteilhaft kann die poröse Schicht aber auch nur mit dem Katalysatormaterial in einer geeigneten Weise beschichtet sein, um bei nahezu gleicher Wirkung teures Katalysatormaterial einzusparen. Eine katalytisch aktive poröse Schicht weist Vorteile bei der Umsetzung gasförmiger Produkte, in diesem Fall des Alkohols auf, da die katalytisch aktive Fläche in einer porösen Schicht regelmäßig besonders groß ist.

Vorteilhaft wird eine poröse Schicht innerhalb des Kathodenraums parallel zur Elektrodenoberfläche angeordnet. Dadurch entsteht zwischen der Kathode und der katalytisch aktiven Schicht ein Luftraum, der zugleich als Wasserabscheider fungiert. Das bei der Oxidation des Oxidationsmittels an der Kathode entstehende Wasser und auch das durch Permeation durch die Membran diffundierende Wasser von der Anodenseite verbleibt vorteilhaft direkt an der Kathode. Beispielsweise läuft das entstehende Wasser an der Kathode in Tropfenform ab und erreicht somit nicht die poröse Schicht. Dadurch wird erreicht, daß die poröse Schicht selbst möglichst trocken bleibt. Die Aktivität des Katalysators auf der porösen Schicht kann so wirksam erhöht werden.

In einer weiteren Ausgestaltung wird der Katalysator in Form einer porösen Schicht als Trennwand zwischen Oxidationsmitteleinlaß und Abgasauslaß innerhalb des Kathodenraums angeordnet, um zu erzielen, daß der gesamte Abgasstrom aus dem Kathodenraum zunächst den Katalysator passiert.

Eine vorteilhafte Ausgestaltung des Brennstoffzellensystems sieht weiterhin eine Abgasleitung von einem Anodenraum in einen Kathodenraum vor, wobei die Mündung der Abgasleitung aus dem Anodenraum in den Raum zwischen Kathode und poröser, Katalysator aufweisender Schicht vorgesehen ist.
Damit wird auch der gesamte Abgasstrom aus dem Anodenraum, der gasförmigen, nicht umgesetzten Alkohol aufweisen kann, in Kontakt mit dem Katalysator gebracht. Damit vermag der Katalysator vorteilhaft sowohl den anodenseitig, als auch den kathodenseitig anfallenden gasförmigen Alkohol im Abgas umzuwandeln. Insbesondere kann der Alkohol unter geeigneten Bedingungen in für den Menschen unschädliches Wasser und CO₂ umgewandelt werden.

Bei dem erfindungsgemäßen Verfahren nach Anspruch 9 wird in einem Brennstoffzellensystem gebildetes Abgas einem Katalysator zugeführt. Dabei kann das Abgas einer jeden Brennstoffzelle des Brennstoffzellensystems einzeln einem Katalysator zugeführt werden, oder aber auch alle Abgasströme zunächst gesammelt und anschließend einem Katalysator zugeführt werden.

Vorteilhaft wird das kathodenseitig gebildete Abgas einer einzelnen Brennstoffzelle einem im Kathodenraum befindlichen Katalysator zugeführt.

Eine weitere Ausgestaltung des Verfahrens sieht vor, zunächst das anodenseitig gebildete Abgas in einen Kathodenraum zu leiten, und dann zusammen mit dem dort zusätzlich gebildeten Abgas einem Katalysator zuzuführen. Insbesondere ist auch dieser Katalysator direkt im Kathodenraum angeordnet.

Besonders effektiv gestaltet sich das Verfahren, wenn die Abgasströme dem Katalysator in Form einer katalytisch aktiven porösen Schicht, insbesondere einem Filter, zugeführt werden, bzw. diesen Filter durchströmen. Sofern der Filter vollständig in einer Abgasleitung bzw. einem Abgasraum angeordnet ist, ist gewährleistet, daß das gesamte Abgas diesen Filter passieren muß, bevor es in die Umgebung gelangt. Eine solche Anordnung, bzw. ein solches Verfahren, bewirkt vorteilhaft eine größtmögliche Umsetzung der Alkohol aufweisenden Abgase eines Brennstoffzellensystems und damit die Verringerung bzw. Verhinderung eines Alkoholaustrages in die Umgebung.

Die Erfindung bewirkt weiterhin, daß der Kohlendioxidausstoß durch die zusätzliche Konvektion den Wasseraustrag verbessert. Außerdem stellt die zusätzliche katalytisch aktive Schicht einen Filter dar, der Verunreinigungen aus der Umgebungsluft von der Kathode (Luftelektrode) fernhält. Weiterhin wirkt sich die zusätzliche poröse Schicht günstig auf die thermischen Verhältnisse innerhalb des Brennstoffzellensystems aus, da sie eine zu große Verdunstung des Wassers auf der Kathodenseite verhindert. Die Schicht verhindert regelmäßig eine zu große Luftkonvektion, die wiederum zur Auskühlung durch Wasserverdunstung führt.

Im folgenden wird die Erfindung anhand von drei Figuren näher erläutert.

Es zeigen
- Figur 1:: Brennstoffzelle mit Anoden- und Kathodenraum gemäß Stand der Technik.
- Figur 2:: Brennstoffzelle mit zusätzlichem Katalysator im Kathodenraum.
- Figur 3:: Brennstoffzelle mit zusätzlichem Katalysator im Kathodenraum und Abgasführung vom Anoden- in den Kathodenraum.

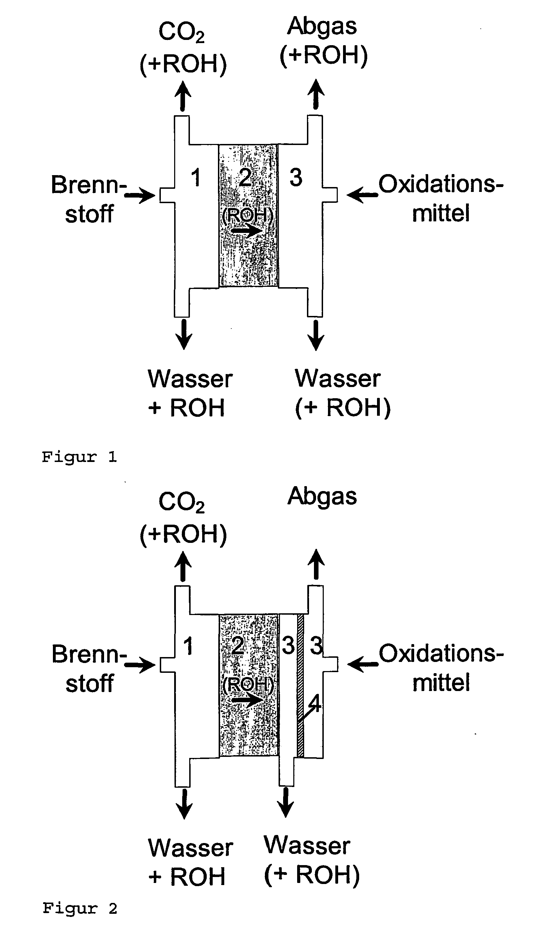

Die Figur 1 zeigt eine Brennstoffzelle gemäß dem Stand der Technik mit einer Elektroden-Elektrolyt-Einheit 2 sowie einem Anodenraum 1 und einem Kathodenraum 3. Als Brennstoff wird eine Alkohol-Wasser-Mischung eingesetzt. Die abgereicherte Alkohol-Wassermischung verläßt den Anodenraum 1. Gasförmiges CO₂ und gasförmig vorliegender Alkohol gelangen über die Anodenabgasleitung in die Umwelt. Durch die Alkoholpermeation gelangt Alkohol von dem Anodenraum 1 in den Kathodenraum 3. Hier wird er als Wasser-Alkoholmischung abgezogen und/oder in gasförmigem Zustand über die Kathodenabgasleitung ebenfalls in die Umwelt ausgetragen.

Bei der Brennstoffzelle in Figur 2 wird erfindungsgemäß ein zusätzlicher Katalysator im Abgasbereich angeordnet, hier als poröse, katalytisch aktive Schicht 4 im Kathodenraum 3. Das zugeführte Oxidationsmittel durchströmt den Katalysator 4 und wird gleichzeitig gefiltert. Durch den Elektrolyten in den Kathodenraum 3 diffundierter Alkohol wird gasförmig am Katalysator 4 umgewandelt und verläßt den Kathodenraum 3 beispielsweise als Wasser und CO₂.

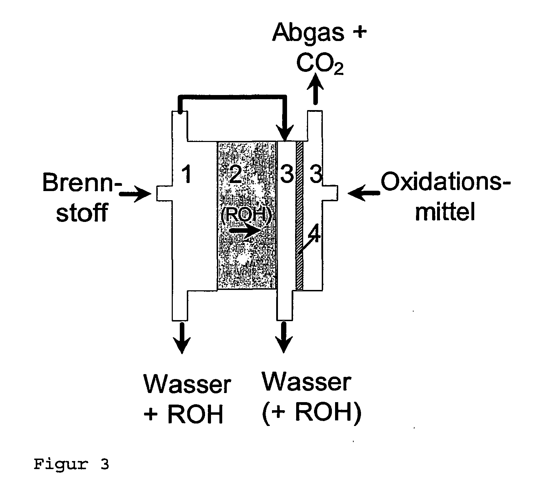

In einer weiteren Ausgestaltung gemäß Figur 3 wird zusätzlich der Alkohol aufweisende Abgasstrom aus dem Anodenraum 1 zunächst in den Kathodenraum 3 eingeleitet, wo er die poröse, katalytisch aktive Schicht 4 passiert. Hier wird der Alkohol regelmäßig in CO₂ und Wasser umgewandelt, so daß nahezu alkoholfreies Abgas aus der Brennstoffzelle austritt.

## Patentansprüche

1. Brennstoffzellensystem, umfassend wenigstens eine Brennstoffzelle, bei dem im Kathodenraum (3) wenigstens einer Brennstoffzelle ein in Form einer porösen Schicht oder als Beschichtung einer porösen Schicht vorliegender Katalysator (4) angeordnet ist, der eine Oxidation gasförmigen Alkohols zu katalysieren vermag,
**dadurch gekennzeichnet,**
**dass** die poröse Schicht im Kathodenraum (3) nahezu parallel zur Kathodenoberfläche angeordnet ist, wobei zwischen der Kathode (2) und der porösen Schicht (4) ein Luftspalt existiert.

2. Brennstoffzellensystem nach vorhergehendem Anspruch 1, bei dem die poröse Schicht im Kathodenraum als Trennwand zwischen Oxidationsmitteleinlass und Abgasauslass angeordnet ist.

3. Brennstoffzellensystem nach einem der vorhergehenden Ansprüche 1 bis 2, bei dem eine Abgasleitung vom Anodenraum einer Brennstoffzelle in den Kathodenraum vorgesehen ist, wobei die Mündung der Abgasleitung in den Raum zwischen Kathode und poröser, Katalysator aufweisender, Schicht vorgesehen ist.

4. Verfahren zum Betreiben eines Brennstoffzellensystems nach einem der vorhergehenden Ansprüche 1 bis 3 mit den Schritten
a. innerhalb des Brennstoffzellensystems gebildetes, Alkohol aufweisendes Abgas wird einem Katalysator (4) zugeführt, der Alkohol umzuwandeln vermag, und innerhalb eines Kathodenraums (3) einer Brennstoffzelle angeordnet ist, wobei zwischen der Kathode (2) und dem Katalysator (4) ein Luftspalt existiert,
b. der Katalysator (4) wandelt den gasförmigen Alkohol katalytisch in Wasser und CO₂ um.

5. Verfahren nach vorhergehendem Anspruch 4, bei dem das Abgas dem Katalysator zugeführt wird, der in Form einer porösen Schicht oder als Beschichtung einer porösen Schicht vorliegt.

6. Verfahren nach einem der vorhergehenden Ansprüche 4 bis 5, bei dem anodenseitig gebildetes Abgas in den Kathodenraum geleitet, und das anodenseitig und kathodenseitig gebildete Abgas zusammen dem Katalysator zugeführt wird.

7. Verfahren nach einem der vorhergehenden Ansprüche 4 bis 6, bei dem die Abgase einen katalytisch aktiven Filter als Katalysator durchströmen.

## Claims

1. Fuel cell system, comprising at least one fuel cell, in which in the cathode compartment (3) a catalyst (4) present in the form of a porous layer or as a coating of a porous layer is allocated to at least one fuel cell, which is able to catalyse an oxidation of gaseous alcohol,
**characterised in that**,
the porous layer in the cathode compartment (3) is arranged almost parallel to the cathode surface, in which there is an air gap between the cathode (2) and the porous layer (4).

2. Fuel cell system according to the foregoing claim 1, in which the porous layer in the cathode compartment is arranged as a partition between the oxidizer inlet and the exhaust outlet.

3. Fuel cell system according to one of the foregoing claims 1 to 2, in which an exhaust duct is provided from the anode compartment of a fuel cell into the cathode compartment, in which the orifice of the exhaust duct is provided in the compartment between the cathode and the porous layer, which has a catalyst.

4. Procedure for operating a fuel cell system according to one of the foregoing claims 1 to 3 with the steps:
a. exhaust gas formed within the fuel cell system, which contains alcohol is fed to a catalyst (4), which is able to convert alcohol and is allocated to a fuel cell within a cathode compartment (3), in which there is an air gap between the cathode (2) and the catalyst (4).
b. the catalyst (4) catalytically converts the gaseous alcohol into water and CO₂.

5. Procedure according the foregoing claim 4, in which the exhaust gas is fed to the catalyst, which is present in the form of a porous layer or as a coating of a porous layer.

6. Procedure according to one of the foregoing claims 4 to 5, in which exhaust gas formed on the anode side is fed to the cathode compartment and the exhaust gas formed on the anode side and on the cathode side is jointly fed to the catalyst.

7. Procedure according to one of the foregoing claims 4 to 6, in which the exhaust gases flow through a catalytically active filter as the catalyst.

## Revendications

1. Système de piles à combustible, comprenant au moins une pile à combustible, dans lequel, dans la chambre cathodique (3) d'au moins une pile à combustible, se trouve un catalyseur (4) se présentant sous la forme d'une couche poreuse ou comme un revêtement d'une couche poreuse, lequel a le pouvoir de catalyser une oxydation d'alcool gazeux,
**caractérisé en ce que** la couche poreuse dans la chambre cathodique (3) est disposée de manière à peu près parallèle à la surface de la cathode, une lame d'air existant entre la cathode (2) et la couche poreuse (4).

2. Système de piles à combustible selon la revendication 1, dans lequel la couche poreuse est disposée dans la chambre cathodique comme une cloison entre l'entrée des agents d'oxydation et la sortie des gaz d'échappement.

3. Système de piles à combustible selon l'une quelconque des revendications 1 à 2, dans lequel une conduite de gaz d'échappement est prévue de la chambre anodique d'une pile à combustible jusqu'à la chambre cathodique, la conduite de gaz débouchant dans l'espace entre la cathode et la couche poreuse présentant le catalyseur.

4. Procédé pour exploiter un système de piles à combustible selon l'une quelconque des revendications 1 à 3 comportant les étapes consistant à :
a. Du gaz d'échappement, comprenant de l'alcool et formé à l'intérieur du système de piles à combustible, est amené à un catalyseur (4) permettant la transformation de l'alcool et disposé à l'intérieur d'une chambre cathodique (3) d'une pile à combustible, une lame d'air existant entre la cathode (2) et le catalyseur (4),
b. le catalyseur (4) transforme de manière catalytique l'alcool gazeux en eau et en CO₂.

5. Procédé selon la revendication 4, dans lequel le gaz d'échappement est amené au catalyseur, qui se présente sous la forme d'une couche poreuse ou comme un revêtement d'une couche poreuse.

6. Procédé selon l'une quelconque des revendications 4 à 5, dans lequel le gaz d'échappement formé du côté de l'anode est conduit dans la chambre cathodique, et le gaz d'échappement formé du côté de l'anode et le gaz formé du côté de la cathode sont amenés ensemble au catalyseur.

7. Procédé selon l'une quelconque des revendications 4 à 6, dans lequel les gaz d'échappement traversent en s'écoulant un filtre catalytiquement actif utilisé comme catalyseur.
